# EUROPÄISCHE PATENTANMELDUNG

(11) **EP 3 309 342 A1**
(43) Veröffentlichungstag der Anmeldung: **18.04.2018**
(21) Anmeldenummer: 16193224.9
(22) Anmeldetag: 11.10.2016
(51) Int. Cl.: E06B 3/54, E06B 3/56

(54) **VERFAHREN ZUR HERSTELLUNG VON VERKLOTZUNGEN UND APPLIKATIONSVORRICHTUNG**

(71) Anmelder: nolax AG, 6203 Sempach Station (CH)
(72) Erfinder: Bruderer, Beat, 8055 Zürich (CH); Steiner, Patrick, 6467 Schattdorf (CH); Brandmair, Anton, 6207 Nottwil (CH)
(74) Vertreter: Hepp Wenger Ryffel AG

(57) **Zusammenfassung**

Die Erfindung betrifft ein Verfahren zur Herstellung von Verklotzungen und eine Applikationsvorrichtung. Das Verfahren zur Herstellung von Verklotzungen von Fenstern (1) umfasst die Schritte Bereitstellen eines Rahmens aus Rahmenprofilen (2) mit einer oder mehreren darin angeordneten Scheiben (3), wobei zwischen mindestens einem Rahmenprofil (2) und der einen oder den mehreren Scheiben (3) ein Spalt (4) ausbildbar ist, Anbringen von einer oder mehreren insbesondere anpassbaren Abdeckungen (7) zum Abdecken eines Applikationsbereichs, wobei der Applikationsbereich durch die eine oder mehreren Abdeckungen (7) in Umfangsrichtung, das Rahmenprofil (2) und die eine oder die mehreren Scheiben (3) begrenzt wird, wobei die eine oder mehreren Abdeckungen mindestens eine Öffnung aufweist, Einbringen des aushärtbaren Kunststoffs (6) durch die Öffnung der einen oder der mehreren Abdeckungen in den Applikationsbereich.

## Beschreibung

Die Erfindung betrifft ein Verfahren zur Herstellung von Verklotzungen von Fenstern, wobei insbesondere schnell aushärtende Kunststoffe die Verklotzung bilden, und eine Applikationsvorrichtung.

Bei der Verglasung von isolierenden Fenstern, Fensterflügeln oder Glastüren werden eine oder mehrere Scheiben in einen vorgefertigten Rahmen eingesetzt und dort fixiert. Die Scheiben sind meist in einem relativ dicken und schweren Scheibenpaket zusammengefasst. Der Rahmen besteht aus Rahmenprofilen. Bei Neuverglasungen von Rahmen aber auch Reparaturarbeiten werden üblicherweise Klötze aus Kunststoff zwischen den Rand der Scheibe oder des Scheibenpakets und den Rahmenfalz des Rahmens eingesetzt (Verklotzung). Die Klötze fixieren die Scheiben oder das Scheibenpaket in einer zentralen Position. Bei der bestimmungsgemässen Verwendung eines solchen Fensters leiten die eingesetzten Klötze das Gewicht der Scheiben oder des Scheibenpakets auf das Drehlager des Fensters ab.

Fehlverklotzungen führen regelmässig zu Scheibenbrüchen, da Kräfte und damit Spannungen innerhalb der Scheiben nur ungenügend oder unkontrolliert abgeleitet werden. Unter Fehlverklotzung wird allgemein die falsche oder unzureichende Positionierung der Klötze verstanden. Durch Fehlverklotzungen entstehende Schäden müssen aufwendig repariert werden.

Verfahren für die Verklotzung von Fenstern sind bekannt. DE 195 46 847 A1 beschreibt ein Verfahren zur Fixierung von Scheiben im Falz eines Rahmens durch kantenseitig beabstandetes Einlegen und nachfolgende Verklotzung mit Falzeinlagen. Allseitig abgeschlossene Volumen innerhalb der eingelegten Falzeinlagen werden mit einem flüssigen Medium befüllt und damit die Falzeinlage durch Druckbeaufschlagung in Richtung der Kante der Scheibe bewegt bis die Falzeinlage anliegt.

EP 2 685 043 A1 beschreibt einen Fenster- oder Türflügel aus einem Rahmen mit Rahmenprofilen und einem in diesen eingesetzten Scheibenpaket. In einen Rahmenspalt zwischen dem Rand des Scheibenpakets und dem Falz eines Rahmenprofils sind ein oder mehrere Verglasungsklötze eingesetzt. Mindestens einer der Verglasungsklötze ist mit offener Boden- und Deckfläche ausgebildet und weist eine Klebstofffüllung im Inneren auf, welche den Rand des Scheibenpakets mit dem Rahmenfalz verklebt. Nachteilig an den vorgenannten Verfahren und Fenstern ist, dass die Klötze schwierig einzubringen sind. Des Weiteren macht ein nachträgliches Befüllen einen zusätzlichen Verfahrensschritt notwendig.

EP 1 373 672 beschreibt ebenfalls die Verklotzung von Fenstern. Eine Klebstoffschicht befindet sich in einem Spalt zwischen Falz und Isolierverglasung, wobei mit Abstand von der Falzfläche ein in Umfangsrichtung verlaufender Begrenzungssteg für die Klebstoffschicht vorgesehen ist. Die Klebstoffschicht wird aus einem elastischen Klebstoff gebildet. Der eingebrachte Klebstoff neigt zum Verfliessen und damit ist eine Verklotzung zum Ableiten von grossem Gewicht/Kräften nicht gewährleistet.

Es ist Aufgabe der Erfindung die Nachteile des Stands der Technik zu überwinden. Insbesondere ist es Aufgabe der Erfindung ein Verfahren bereitzustellen, worin keine seitlichen Begrenzungen in den Rahmenspalt eingebracht werden müssen. Eine weitere Aufgabe der Erfindung ist es insbesondere, eine Applikationsvorrichtung bereitzustellen, welche ein einfaches Einbringen einer Verklotzung ermöglicht.

Die Erfindung betrifft ein Verfahren zur Herstellung von Verklotzungen von Fenstern. Das Verfahren umfasst den Schritt des Bereitstellens eines Rahmens aus Rahmenprofilen mit einer oder mehreren darin angeordneten Scheiben, insbesondere einem darin angeordneten Scheibenpaket. Dabei ist zwischen mindestens einem Rahmenprofil und der einen oder den mehreren Scheiben ein Spalt ausbildbar. Das Verfahren umfasst weiter das Anbringen von einer oder mehreren insbesondere anpassbaren, insbesondere temporären, Abdeckungen zum Abdecken eines Applikationsbereichs. Dabei wird der Applikationsbereich durch die eine oder mehreren Abdeckungen in Umfangsrichtung, das Rahmenprofil und die eine oder die mehreren Scheiben begrenzt.

Die eine oder mehreren Abdeckungen weisen mindestens eine Öffnung, insbesondere eine Bohrung, auf. Unter einer Öffnung kann auch eine Zuleitung verstanden werden, durch welche der aushärtbare Kunststoff in den Applikationsbereich einbringbar ist. Das Verfahren umfasst des Weiteren den Schritt des Einbringens des aushärtbaren Kunststoffs durch die Öffnung der einen oder der mehreren Abdeckungen in den Applikationsbereich. Auf diese Weise müssen keine Begrenzungen in Längsrichtung des Rahmenprofils in den Spalt eingebracht werden, um ein Weglaufen des eingebrachten Kunststoffes zu verhindern. Dieser ist vorteilhafterweise zunächst flüssig, so dass das Einbringen möglich ist, und härtet schnell aus. Derart ist das Verfahren schneller und sicherer als Verfahren zur Verklotzung aus dem Stand der Technik. Es wird davon ausgegangen, dass sich der eingebrachte Kunststoff seitlich selbst begrenzt; dies durch Angelieren oder durch den Viskositätsanstieg bei der Reaktion (Vernetzung bzw. Aushärtung) des Kunststoffs oder durch rheologische Eigenschaften wie bspw. Strukturviskosität oder Thixoptropie.

Unter Abdeckungen in Umfangsrichtung verstehen sich hier und im Folgenden Abdeckungen, welche dem Spalt im Wesentlichen in Umfangsrichtung folgen und den Spalt bereichsweise abdecken. Derart wird auf der Höhe der Oberfläche des Glases abgedichtet, der Applikationsbereich nach oben hin begrenzt und die Glasfläche vor Kontakt mit dem Kunststoff geschützt.

Die eine oder mehreren Abdeckungen können breiter sein als der Applikationsbereich und somit auch bereichsweise auf die einen oder mehreren Scheiben, insbesondere das Scheibenpaket, und/oder den Rahmenprofilen positioniert werden. Dies führt zur besonders guten Abdichtung des Applikationsbereichs. Dabei kann die eine oder mehreren Abdeckungen auch in der Umfangsrichtung über den Applikationsbereich hinaus ragen.

Das Einbringen des aushärtbaren Kunststoffes ist bevorzugt ein Giessen oder Sprühen. Auf diese Weise ist das Einbringen des Kunststoffs besonders gut kontrollierbar.

Die eine oder mehreren Abdeckungen sind bevorzugt aus schwer verklebbaren Materialien, wie beispielsweise Polyethylen Polytetrafluorethylen, Polypropylen oder Silikon gefertigt. Die Abdeckungen können auch aus beschichtetem Aluminium oder Stahl gefertigt sein.

In dem Verfahren kann eine oder mehrere insbesondere anpassbare, insbesondere temporäre, Begrenzungen den Applikationsbereich in Längsrichtung mit Bezug auf das Rahmenprofil begrenzen. Die Begrenzungen können als Druckluft im Sinne eines Luftvorhangs angelegt werden. Dazu kann eine Druckluftzufuhr für ein gerichtetes Einleiten von Druckluft vorgesehen sein. Mehrere Druckluftzufuhren können gleichermassen vorgesehen sein. Alternativ kann ein zweites Kunststoffsystem - in diesem Fall bildet der zuvor genannte aushärtbare Kunststoff das erste Kunststoffsystem - mit höherer Viskosität als das erste Kunststoffsystem, welches die Verklotzung bildet, als seitliche Begrenzung/en eingebracht werden.

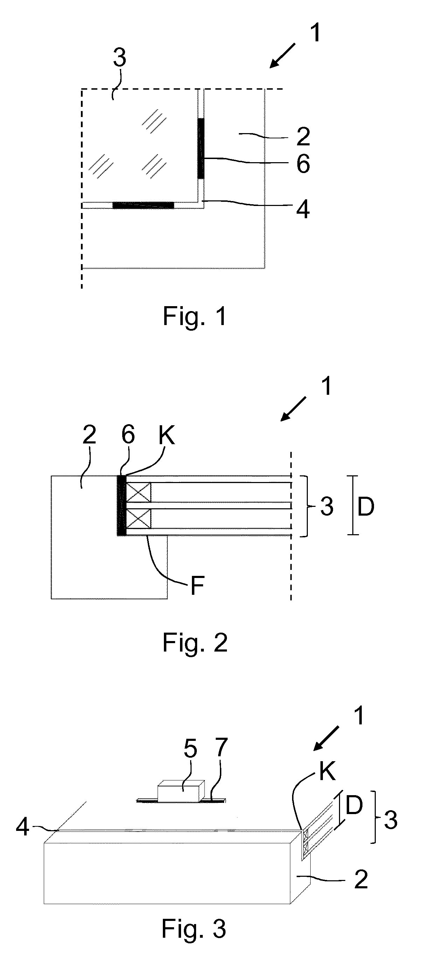

Unter Begrenzungen in Längsrichtung verstehen sich Begrenzungen, welche im Wesentlichen quer, insbesondere rechtwinklig, zur Umfangsrichtung entlang der Dicke der einen oder der mehreren Scheiben, insbesondere des Scheibenpakets, in Bezug auf das Rahmenprofil angeordnet oder anordenbar sind. Selbstverständlich können bei Einführung von zwei Begrenzungen in Längsrichtung, sich diese im Winkel zur Umfangsrichtung des Rahmenprofils voneinander unterscheiden. Die Begrenzungen in Längsrichtung können quer, insbesondere rechtwinklig, zur Fläche des Profils angeordnet oder anordenbar sein, auf welcher die eine oder mehreren Scheiben, insbesondere das Scheibenpacket, aufliegt (vgl. Figur 2). Selbstverständlich könne bei Einführung von zwei Begrenzungen in Längsrichtung sich dies im Winkel zur Fläche des Profil, auf welcher die eine oder mehreren Scheiben, insbesondere das Scheibenpaket, aufliegen, voneinander unterscheiden. Des Weiteren können neben einer oder mehreren Abdeckungen in Umfangsrichtung eine oder mehrere Begrenzungen in Längsrichtung quer, insbesondere rechtwinklig, zur Umfangsrichtung entlang der Dicke der einen oder der mehreren Scheiben, insbesondere des Scheibenpakets, angeordnet oder anordenbar sein.

Das Verfahren kann des Weiteren das Aushärten des eingebrachten Kunststoffs umfassen. Derart wird aus dem eingebrachten Kunststoff ein belastbarer Klotz, welcher die bekannten Anforderungen für die Fensterverklotzung, wie bspw. Kompensation von Mass- und Produktionstoleranzen des Fensters und gleichmässiges Ableiten von Lasten der Gläser, aufweist. Insbesondere wird der Kunststoff von den insbesondere anpassbaren, insbesondere temporären, Abdeckung für eine Dauer abgedeckt, bis der Kunststoff ausreichend ausgehärtet ist.

Der Applikationsbereich bzw. die Dimensionen des Applikationsbereichs hängen von der Spaltgrösse, bevorzugt im Bereich von 1 bis 5 mm; der Dicke der einen oder der mehreren Scheiben, insbesondere dem Scheibenpacket, bevorzugt im Bereich von 18 bis 60 oder 100 mm. Die Länge der Verklotzung kann im Bereich von 25 bis 300 mm, bevorzugt 50 bis 150 mm, besonders bevorzugt 75 bis 125 mm, sein. Optimal kann die Verklotzung eine Länge von 100 mm aufweisen. Der Applikationsbereich kann Dimensionen im Bereich von 2 mm x 18 mm x 50 mm bis 9 mm x 100 mm x 300 mm, bevorzugt 3 mm x 36 mm x 100 mm, besonders bevorzugt 4 mm x 40 mm x 100 mm aufweisen. Da die insbesondere anpassbaren, insbesondere temporären, Abdeckungen an die Dimensionen des Spaltes anpassbar sind, kann ein Applikationsbereich mit den vorgängig erwähnten Dimensionen konzipiert sein. Auf diese Weise kann ein Spalt mit den vorgenannten Dimensionen bereichsweise mit dem aushärtbaren Kunststoff ausgefüllt werden.

Der aushärtbare Kunststoff kann auf schnell aushärtbaren Polyharnstoff-Klebstoffen basieren. Generell handelt es sich dabei um Zwei-Komponenten-Klebstoffe umfassend eine isocyanathaltige Komponente A und eine aminhaltige Komponente B, wobei die Komponente A ein Isocyanat-terminiertes und die Komponente B wenigstens ein Di- und/oder Polyamin und/oder Polyetherpolyamin enthält. Derartige Klebstoffzusammensetzungen sind in EP 1 958 975 A1 beschrieben und werden hiermit durch Bezugnahme aufgenommen. Auf diese Weise härtet der Kunststoff schnell aus, was hohe Taktraten im Fertigungsprozess ermöglicht. Des Weiteren kann die Komponente A ein monomeres Polyisocyanat aufweisen.

Der vorgenannte Kunststoff basierend auf einem schnell aushärtbaren Polyharnstoff-Klebstoff kann des Weiteren einen Trimerisierungskatalysator, insbesondere in der Komponente B, aufweisen. Als Trimerisierungskatalysatoren können insbesondere Metallsalze einer Carbonsäure, bevorzugt Kaliumoctoat und Kaliumacetat, Phosphine, Natriumhydroxid, Kaliumhydroxid, quarternäre Ammoniumsalze, 2,4,6-Tris(dimethylaminomethyl)phenol und/oder Mischungen von Katalysatoren wie beispielsweis Jeffcat TR® (Huntsman) verwendet werden. Die folgenden Handelsprodukte können auch als Katalysatoren eingesetzt werden: DABCO K-15, DABCO TMR, DABCO TMR-7, DABCO TMR-20, Polycat 46 (alle von Air Products), sowie Niax C-41 (von Momentive).

Der aushärtbare Kunstsoff kann Füllstoffe aufweisen, bevorzugt ausgewählt aus der Liste umfassend pyrogene und gefällte Kieselsäuren, Bentonite, Kreide, Kaolin, Wollastonit, Glimmer, Molekularsiebe, Glaskugeln, Russ, Kautschuke, Silikone, Titandioxid.

Der aushärtbare Kunstsoff kann ein strukturviskoser Klebstoff sein. Strukturviskose Klebstoffe sind vorteilhaft, da sie nicht verfliessen oder nur verfliessen wenn Scherkräfte ausgeübt werden, nicht in porösen Substraten versacken, die Füllstoffe sich nicht absetzten oder aufschwimmen und ein geringes Trennverhalten von unverträglichen Komponenten aufweisen. Wird ein strukturviskoser Klebstoff eingesetzt, so muss dieser kein schnell aushärtendes System sein, da der Klebstoff aufgrund seiner Strukturviskosität im unausgehärteten Zustand nicht verfliesst. Ebenso können strukturviskose, schnell aushärtende Systeme verwendet werden.

Der aushärtbare Kunststoff kann ein thixotroper Klebstoff sein. Dieser ist vorteilhaft, da er im unausgehärteten Zustand ohne mechanische Beanspruchung nicht verfliesst. Hierbei können schnell und langsam aushärtende Systeme verwendet werden.

Unter einem schnellen System wird hier und im Folgenden ein aushärtbarer Kunststoff verstanden, der derart ausgestaltet ist, dass er eine Zugfestigkeit von > 0.1 MPa nach 2 bis 20 sek, bevorzugt 5 bis 15 sek, besonders bevorzugt 7 bis 12 sek, nach dem Einbringen in den Applikationsbereich aufweist. Die Zugfestigkeit wird im Zugscherversuch nach DIN 53283, September 1979, bestimmt.

Die Einbringzeit im Sinne von Schusszeit für das Einbringen des aushärtbaren Kunststoffs ist bevorzugt im Bereich von 0.25 bis 1.75 sek, bevorzugt 0.5 bis 1.5 sek, besonders bevorzugt 0.75 bis 1.25 sek.

Die Einbringleistung im Sinne von Auftragsleitung für das Einbringen des aushärtbaren Kunststoffs ist bevorzugt im Bereich von 10 bis 40 g/sek, bevorzugt 15 bis 35 g/sek, besonders bevorzugt 20 bis 30 g/sek. Derart steht der Kunststoff bis zur Abdeckung und ist oben und unten im Wesentlichen gleich breit.

Das erfindungsgemässe Verfahren kann über die Einstellung der Einbringzeit und der Einbringleitung situationsbedingt angepasst werden.

Der aushärtbare Kunststoff kann derart eingestellt sein, dass der aushärtbare Kunststoff beim Aushärten mit dem Rahmenprofil und/oder der einen oder den mehreren Scheiben, insbesondere dem Scheibenpacket, und/oder einem Dichtstoff, welcher mehrere Schreiben, insbesondere in einem Scheibenpaket, abdichtet und zusammenhält, verklebt. Dies bedeutet dass der aushärtbare Kunststoff entweder nur mit dem Rahmenprofil oder mit der einen oder den mehreren Scheiben und/oder mit dem Dichtstoff, sofern vorhanden, verklebt. Alternativ kann der aushärtbare Kunststoff auch sowohl mit dem Rahmenprofil als auch mit der einen oder den mehreren Scheiben und/oder mit dem Dichtstoff, sofern vorhanden, verkleben. Auf diese Weise kann eine Verklebung anforderungsgemäss erfolgen.

Des Weiteren kann eine Applikationsvorrichtung bereitgestellt sein. Mittels der Applikationsvorrichtung kann ein, insbesondere schnell, aushärtbarer Kunststoff, eingebracht werden. Der Kunststoff wird dabei in den ausgebildeten Spalt zwischen Rahmenprofil und der einen oder den mehreren Scheiben eingebracht. Mittels der Applikationsvorrichtung kann der Einbringvorgang optimal gesteuert werden, insbesondere kann die Auftragsmenge, Einbringleistung und Auftragsposition reproduzierbar erfolgen. Auf diese Weise werden Fehlverklotzungen minimiert.

Die Applikationsvorrichtung kann die vorgängig erläuterten insbesondere anpassbaren, insbesondere temporären, Abdeckungen umfassen. Beim Anfahren der Applikationsvorrichtung an eine Applikationsstelle werden ein Spalt zwischen Rahmenprofil und der einen oder den mehreren Scheiben ausgebildet und die insbesondere anpassbaren, insbesondere temporären, Abdeckungen angebracht. Die Abdeckungen definieren wie vorgängig beschrieben den Applikationsbereich bzw. die Dimensionen des Applikationsbereichs. Auf diese Weise ist der Prozessablauf beschleunigt und hohe Taktraten können für den Verklotzungsprozess erreicht werden. Sofern seitliche Begrenzungen vorgesehen sind, können diese ebenfalls von der Applikationsvorrichtung umfasst sein.

Zum Ausbilden des Spalts kann auch eine Klemm-, Spreiz- oder Schiebevorrichtung verwendet werden. Eine derartige Vorrichtung sorgt vorteilhaft für die Ausbildung des Spalts zwischen Rahmenprofil und der einen oder den mehreren Scheiben. Diese kann ebenfalls in der Applikationsvorrichtung integriert sein. Somit erfolgen die Schritte Ausbilden des Spalts, Anbringen von Abdeckungen und Einbringen von Kunststoff schnell hintereinander bzw. nahezu gleichzeitig. Auf diese Weise ist der Prozessablauf beschleunigt und hohe Taktraten können für den Verklotzungsprozess erreicht werden.

Das Verfahren kann manuell durchgeführt werden oder automatisiert sein. Ebenso kann das Verfahren teil- bzw. halbautomatisiert sein. Prozessparameter wie beispielsweise Positionen der Verklotzung, Anzahl der Verklotzung pro Rahmen, Dimensionen der Klötze, Einbringzeiten des Kunststoffs und Taktraten, können mittels des automatisierten Verfahrens anwendungsspezifisch gewählt und ausgeführt werden. Dazu können eine Steuereinheit und entsprechende Roboter vorgesehen sein. Auf diese Weise ist das Verfahren mit besonders hohen Taktraten und geringer Fehleranfälligkeit durchführbar. Fehlverklotzungen werden durch das automatisierte Verfahren im Vergleich zum manuellen Einbringen von Verklotzung minimiert.

Ein weiterer Aspekt der Erfindung betrifft eine Applikationsvorrichtung zum Einbringen eines, insbesondere schnell, aushärtbaren Kunststoffes. Die Applikationsvorrichtung umfasst eine insbesondere anpassbare, insbesondere temporäre Abdeckung mit mindestens einer Öffnung, insbesondere Bohrung, oder mehrere insbesondere anpassbare, insbesondere temporäre, Abdeckungen (7) mit mindestens einer Öffnung, insbesondere Bohrung, für ein Verfahren zur Verklotzung. Bevorzugt ist das Verfahren das vorgängig erläuterte erfindungsgemässe Verfahren. Die Abdeckung deckt in der Anwendungsgemässen Situation den Applikationsbereich ab. Dabei kann die Abdeckung breiter sein als der Applikationsbereich und somit bei der Verwendung auch bereichsweise auf die einen oder mehreren Scheiben, insbesondere das Scheibenpaket, und/oder den Rahmenprofilen positioniert werden. Dies führt zur besonders guten Abdichtung des Applikationsbereichs Dabei kann die Abdeckung auch in der Umfangsrichtung über den Applikationsbereich hinaus ragen.

Die Applikationsvorrichtung kann direkt auf die Austrittsstelle des Kunststoffes auf einem Mischelement befestigt (als Add-on Einheit) oder als integrales Bestandteil eines Mischelementes konzipiert sein. Die Applikationsvorrichtung kann aus einem tragenden und abdichtenden Balken, im Sinne eines Trägers, bestehen. Der Träger bildet eine Abdeckung in Umfangsrichtung, wenn dieser auf dem Spalt angeordnet ist.. An den Enden des Trägers können weitere Begrenzungselemente zur Begrenzung des Applikationsbereichs in Längsrichtung in einem Winkel von ca. 90° zum Träger angeordnet sein.

Diese Begrenzungselemente werden, sofern vorgesehen, in den vorhandenen Spalt zwischen Glas und Falz des Rahmenprofils eingeführt. Diese verhindern ein Verlaufen des eingebrachten Kunststoffes in Längsrichtung. Die Begrenzungen in Längsrichtung dichten den so entstandenen Hohlraum, welcher dem Applikationsbereich entspricht, seitlich ab. Die Begrenzungen können in der Höhe variabel und damit anpassbar sein.

Die Abdeckung kann den Hohlraum in Umfangsrichtung gegen die Oberfläche der einen oder der mehreren Scheiben, insbesondere der Oberfläche eines Scheibenpakets, begrenzen und abdichten. Nach dem Applizieren, oder Injizieren, des aushärtbaren Kunststoffes, insbesondere eines Kunststoffes wie vorgängig beschrieben, sowie dessen Aushärtung kann die Applikationsvorrichtung mit den Abdeckungen manuell, halbautomatisch oder automatisch gelöst und entfernt werden. Alternativ können die vorgenannten Begrenzungen als verlorene Schalung konzipiert sein, welche innerhalb des Applikationsbereichs verbleiben.

Die seitlichen Begrenzungen können wie vorgängig erläutert auf Druckluft basieren und weisen die vorgängig beschriebenen Ausgestaltungen und Vorteile auf.

Die Applikationsvorrichtung kann mindestens eine Materialversorgung zum Bereitstellen von aushärtbarem Kunststoff oder Komponenten für einen aushärtbaren Kunststoff umfassen. Selbstverständlich können auch mehrere, insbesondere zwei, Materialversorgungen vorgesehen sein. Derart können aushärtbare Kunststoffe anwendungs- und situationsangepasst bereitgestellt werden.

Die Applikationsvorrichtung kann Einbringzeiten im Sinne von Schusszeiten für das Einbringen des aushärtbaren Kunststoffs im Bereich von 0.25 bis 1.75 sek, bevorzugt 0.5 bis 1.5 sek, besonders bevorzugt 0.75 bis 1.25 sek aufweisen.

Die Applikationsvorrichtung kann Einbringleistungen im Sinne von Auftragsleitungen für das Einbringen des aushärtbaren Kunststoffs im Bereich von 10 bis 40 g/sek, bevorzugt 15 bis 35 g/sek, besonders bevorzugt 20 bis 30 g/sek aufweisen. Derart steht der Kunststoff bis zur Abdeckung und ist oben und unten im Wesentlichen gleich breit.

### AUSFÜHRUNGSBEISPIEL

Eine beispielhafte Kunststoffzusammensetzung, welche im erfindungsgemässen Verfahren eingesetzt werden kann, ist der folgenden Tabelle zu entnehmen.

| **Komponenten** | Produktname |
|---|---|
| Isocyanat-Komponente (A) | W45.5003 (von Nolax) |
| Amingemisch-Komponente (B) | W45.3062 (von Nolax) |
| | |
| | |
| **Mischung A:B** | 100:80 nach Gewicht oder |
| | 100:95 nach Volumen |
| | |
| Viskosität von A | 200 mPa*s bei 20 °C (Brookfield Sp. 5/20 UpM) |
| Viskosität von B | 1000 mPa*s bei 20 °C (Brookfield Sp. 5/20 UpM) |

Der Applikationsbereich gemäss dem Ausführungsbeispiel weist Abmessungen von 100 mm x 36 mm x 4 mm auf. Der genannte Kunststoff wurde mit einer Einbringleistung von 23 g/sek und einer Einbringzeit von 0.75 sek in den Applikationsbereich eingebracht. Die Aushärtzeit betrug 4-5 sek gemessen ab Einbringen des Kunststoffs. Die Aushärtzeit entspricht derjenige Zeit, nach welcher der Kunststoff eine Zugfestigkeit von > 0.1 MPa aufweist (bestimmt wie vorgängig erläutert).

Die Erfindung wird im Folgenden anhand von Abbildungen exemplarischer Ausführungsbeispiele näher erläutert.

Es zeigen:
- Figur 1:: Eine Seitenansicht eines Fensterbereichs mit Verklotzungen;
- Figur 2:: Einen Schnitt eines Fensterbereichs mit Verklotzung;
- Figur 3:: Eine perspektivische Ansicht eines Rahmenprofils mit einer ersten erfindungsgemässen Applikationsvorrichtung;
- Figur 4:: Eine perspektivische Ansicht eines Rahmenprofils mit einer ersten erfindungsgemässen Applikationsvorrichtung am Spalt;
- Figur 5a:: eine perspektivische Ansicht einer zweiten Ausführungsform der erfindungsgemässen Applikationsvorrichtung;
- Figur 5b:: eine perspektivische Ansicht einer zweiten erfindungsgemässen Applikationsvorrichtung mit befülltem Applikationsbereich;
- Figur 6:: eine perspektivische Ansicht eines Profilrahmens mit einer zweiten erfindungsgemässen Applikationsvorrichtung mit befülltem Applikationsbereich.

Figur 1 zeigt eine Seitenansicht eines Bereichs eines Fensters 1 mit Verklotzungen. Das Fenster 1 umfasst ein Rahmenprofil 2 ein Scheibenpaket 3, einen Spalt 4, welcher sich zwischen dem Rahmenprofil 2 und dem Scheibenpaket 3 befindet, und zu Klötzen ausgehärtete Kunststoffe 6. Im eingebauten Betriebszustand des Fensters 1 leiten die Klötze des ausgehärteten Kunststoffs 6 das Gewicht des Scheibenpakets 3 auf das Rahmenprofil 2 ab. Durch ein gezieltes Ableiten der Kräfte werden auftretende Spannungen in einzelnen Scheiben des Scheibenpakets 3 minimiert und ein Glasbruch verhindert.

Figur 2 zeigt einen Schnitt eines Bereichs eines Fensters mit Verklotzung. Das Scheibenpaket 3 liegt auf dem Rahmenprofil 2 auf der Fläche F auf. Zwischen dem Rahmenprofil 2 und dem Scheibenpaket 3 ist ein Klotz aus ausgehärtetem Kunststoff 6 eingebracht. Zwischen einzelnen Scheiben des Scheibenpakets 3 befinden sich Abstandshalter, welche mit den Kanten K der Scheiben im Kontaktbereich zum Klotz aus ausgehärtetem Kunststoff 6 eine Kontaktfläche bilden. Eine Dicke D des Scheibenpakets 3 ist gezeigt. Diese Kontaktfläche begrenzt den Applikationsbereich derart, dass der aushärtbaren Kunststoff 6 beim Einbringen nicht zwischen einzelne Scheiben des Scheibenpakets 3 gelangt. Somit bilden das Rahmenprofil 2 und die Kontaktfläche des Scheibenpakets 3 eine untere und eine obere Begrenzung für den aushärtbaren Kunststoff 6.

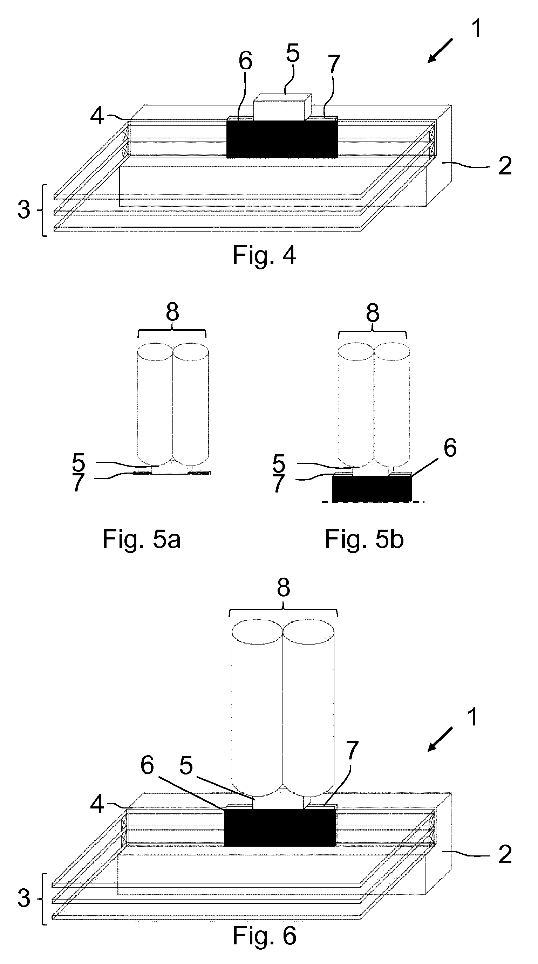

Figur 3 zeigt eine perspektivische Ansicht eines Rahmenprofils 2, eines Scheibenpakets 3 und einer ersten erfindungsgemässen Applikationsvorrichtung 5. Eine Dicke D des Scheibenpakets 3 ist gezeigt. Zwischen einzelnen Scheiben des Scheibenpakets 3 befinden sich Abstandshalter, welche mit den Kanten K der Scheiben eine Kontaktfläche bilden. Die Applikationsvorrichtung 5 umfasst eine insbesondere anpassbare Abdeckung 7, welche im am Spalt 4 angebrachten Zustand einen Applikationsbereich im Spalt 4 zwischen dem Rahmenprofil 2 und dem Scheibenpaket 3 abdeckt. Die insbesondere anpassbare Abdeckung 7 deckt den Applikationsbereich in Umfangsrichtung des Rahmenprofils 2 ab. Somit definieren das Rahmenprofil 2, die Kontaktfläche des Scheibenpakets 3 sowie die Abdeckung 7 den Applikationsbereich für einen aushärtbaren Kunststoff (vgl. Figur 4). Bei entsprechender Wahl des aushärtbaren Kunststoffes sind keine Begrenzungen zur Begrenzung des Applikationsbereichs in Längsrichtung des Rahmenprofils 2 im Spalt 4 notwendig, welche ein Wegfliessen des eingebrachten Kunststoffes verhindern sollen.

Figur 4 zeigt eine perspektivische Ansicht eines Rahmenprofils 2, eines Scheibenpakets 3 und einer ersten erfindungsgemässen Applikationsvorrichtung 5 mit einer Abdeckung 7, wobei die Abdeckung 7 am Spalt 4 angebracht ist. Ein aushärtbarer Kunststoff 6 ist in einen Applikationsbereich, welcher wie vorgängig für Figur 3 erläutert definiert ist, mittels der Applikationsvorrichtung 5 eingebracht. Die Taktraten des erfindungsgemässen Verfahrens sind somit erhöht und das Verfahren vereinfacht. Es führt zu geringeren Fehlverklotzungen.

Figuren 5a und 5b zeigen eine zweite erfindungsgemässe Applikationsvorrichtung 5, welche eine insbesondere anpassbare Abdeckung 7 zum Anbringen an einen Spalt 4 aufweist (vgl. Figuren 1 bis 4). Die Abdeckung 7 ermöglicht ein Begrenzen eines Applikationsbereich in Umfangsrichtung zu einem Rahmenprofil. Die Applikationsvorrichtung 5 umfasst eine Materialversorgung 8, welche zwei oder mehrere Kammern umfasst. Dargestellt sind zwei zylindrische Kammern, in welchen sich Komponenten für einen aushärtbaren Kunststoff befinden können. Wird die Abdeckung 7 an einen Spalt zum Einbringen eines aushärtbaren Kunststoffes angebracht (vgl. Figuren 1 bis 4), können die Komponenten gemischt und in den Applikationsbereich eingebracht werden. Figur 5b zeigt im Unterschied zu Figur 5a einen in den Applikationsbereich eingebrachten Kunststoff 6. Der Applikationsbereich ist wie vorgängig erläutert durch ein Rahmenprofil und ein Scheibenpaket weiter begrenzt (hier nicht gezeigt).

Figur 6 zeigt eine perspektivische Ansicht eines Rahmenprofils 2, eines Scheibenpakets 3 und einer zweiten erfindungsgemässen Applikationsvorrichtung 5 (vgl. Figuren 5a und 5b). Die Applikationsvorrichtung 5 weist eine Abdeckung 7 auf, wobei die Abdeckung 7 am Spalt 4 angebracht ist. Die Applikationsvorrichtung 5 umfasst des Weiteren eine Materialversorgung 8, welche zur Bereitstellung einzelner Komponenten des Kunststoffs zwei oder mehrere Kammern umfasst. Gezeigt sind zwei zylindrische Kammern. Selbstverständlich können auch nur eine oder mehr als zwei Kammern vorgesehen sein. Die Komponenten des Kunststoffes werden gemischt und entsprechend ein aushärtbarer Kunststoff 6 in einen Applikationsbereich, welcher wie vorgängig für Figur 3 erläutert definiert ist, mittels der Applikationsvorrichtung 5 eingebracht. Der Applikationsbereich wird durch die Abdeckung 7 in Umfangsrichtung des Profilrahmens sowie durch die Kontaktfläche des Scheibenpakets 3 und dem Rahmenprofil begrenzt.

## Patentansprüche

1. Verfahren zur Herstellung von Verklotzungen von Fenstern (1) umfassend die Schritte
- Bereitstellen eines Rahmens aus Rahmenprofilen (2) mit einer oder mehreren darin angeordneten Scheiben (3), insbesondere einem darin angeordneten Scheibenpaket, wobei zwischen mindestens einem Rahmenprofil (2) und der einen oder den mehreren Scheiben (3) ein Spalt (4) ausbildbar ist,
- Anbringen von einer oder mehreren insbesondere anpassbaren, insbesondere temporären, Abdeckungen (7) zum Abdecken eines Applikationsbereichs, wobei der Applikationsbereich durch die eine oder mehreren Abdeckungen (7) in Umfangsrichtung, das Rahmenprofil (2) und die eine oder die mehreren Scheiben (3) begrenzt wird, wobei die eine oder mehreren Abdeckungen mindestens eine Öffnung, insbesondere eine Bohrung, aufweist,
- Einbringen des aushärtbaren Kunststoffs (6) durch die Öffnung der einen oder der mehreren Abdeckungen in den Applikationsbereich.

2. Verfahren gemäss Anspruch 1, wobei eine oder mehrere insbesondere anpassbare, insbesondere temporäre, Begrenzungen den Applikationsbereich in Längsrichtung mit Bezug auf das Rahmenprofil (2) begrenzen.

3. Verfahren gemäss Anspruch 1 oder 2 umfassend den Schritt Aushärten des eingebrachten Kunststoffs (6).

4. Verfahren gemäss einem der Ansprüche 1 bis 3, wobei der Applikationsbereich Dimensionen im Bereich von 2 mm x 18 mm x 50 mm bis 9 mm x 100 mm x 300 mm, bevorzugt 3 mm x 36 mm x 100 mm, besonders bevorzugt 4 mm x 40 mm x 100 mm aufweist.

5. Verfahren gemäss einem der Ansprüche 1 bis 4, wobei der aushärtbare Kunststoff (6) auf schnell aushärtbaren Polyharnstoff-Klebstoffen basiert.

6. Verfahren gemäss Anspruch 5, wobei der aushärtbare Kunststoff (6) einen Trimerisierungskatalysator aufweist.

7. Verfahren gemäss einem der Ansprüche 1 bis 6, wobei die Einbringzeit für das Einbringen des aushärtbaren Kunststoffs im Bereich von 0.25 bis 1.75 sek, bevorzugt 0.5 bis 1.5 sek, besonders bevorzugt 0.75 bis 1.25 sek, liegt.

8. Verfahren gemäss einem der Ansprüche 1 bis 7, wobei die Einbringleistung für das Einbringen des aushärtbaren Kunststoffs im Bereich von 10 bis 40 g/sek, bevorzugt 15 bis 35 g/sek, besonders bevorzugt 20 bis 30 g/sek, liegt.

9. Verfahren gemäss einem der Ansprüche 1 bis 8, wobei der aushärtbare Kunststoff (6) derart eingestellt ist, dass der aushärtbare Kunststoff (6) beim Aushärten mit dem Rahmenprofil (2) und/oder der einen oder den mehreren Scheiben (3), insbesondere dem Scheibenpaket, verklebt.

10. Verfahren gemäss einem der Ansprüche 1 bis 9, wobei eine Applikationsvorrichtung (5) zum Einbringen eines, insbesondere schnell, aushärtbaren Kunststoffes (6) bereitgestellt ist.

11. Verfahren gemäss Anspruch 8, wobei die Applikationsvorrichtung (5) die eine oder mehreren insbesondere anpassbaren, insbesondere temporären, Abdeckungen (7) umfasst.

12. Verfahren gemäss einem der Ansprüche 1 bis 11, wobei das Verfahren automatisiert ist.

13. Applikationsvorrichtung (5) zum Einbringen eines, insbesondere schnell, aushärtbaren Kunststoffes (6) umfassend eine insbesondere anpassbare, insbesondere temporäre Abdeckung mit mindestens einer Öffnung, insbesondere Bohrung, oder mehrere insbesondere anpassbare, insbesondere temporäre, Abdeckungen (7) mit mindestens einer Öffnung, insbesondere Bohrung, für ein Verfahren, insbesondere gemäss Anspruch 10 oder 11.

14. Applikationsvorrichtung (5) nach Anspruch 13 umfassend eine oder mehrere insbesondere anpassbare, insbesondere temporäre, Begrenzungen.

15. Applikationsvorrichtung (5) gemäss Anspruch 12 oder 13, umfassend mindestens eine Materialversorgung (8) zum Bereitstellen von aushärtbarem Kunststoff (6) oder Komponenten für einen aushärtbaren Kunststoff (6).
